**Europäisches Patentamt**

**European Patent Office**

**Office européen des brevets**

(11) Veröffentlichungsnummer: **0 033 294**
**A2**

(12) **EUROPÄISCHE PATENTANMELDUNG**

(21) Anmeldenummer: **81710002.7**

(22) Anmeldetag: **09.01.81**

(51) Int. Cl.³: **B 66 B 9/08**

(30) Priorität: **12.01.80 DE 3001298**

(43) Veröffentlichungstag der Anmeldung:
**05.08.81 Patentblatt 81/31**

(84) Benannte Vertragsstaaten:
**AT BE CH FR GB LI LU NL SE**

(71) Anmelder: **Rigert Maschinenbau AG**

**CH-6405 Immensee / SZ(CH)**

(72) Erfinder: **Rigert, César**
**Breitgasse 30**
**CH-6415 Arth(CH)**

(74) Vertreter: **Eikenberg, Kurt-Rudolf, Dr.**
**Dipl.-Chem. et al,**
**Patentanwälte Eikenberg & Brümmerstedt**
**Schackstrasse 1**
**D-3000 Hannover 1(DE)**

(54) **Fördersystem für einen Treppenlift.**

(57) Bei diesem Fördersystem wird eine Plattform (4) angetrieben und bewegt, die einem Rollstuhl aufnehmen kann, in welchem sich ein Körperbehinderter befindet. Dadurch wird es Körperbehinderten ermöglicht, durch Treppen überbrückte Stockwerke eines Gebäudes zu erreichen. Längs des zu überwindenden Weges verläuft eine Zahnstange (6), in die ein ortsfest mit der Plattform (4) verbundenes Antriebsrad (10, 30, 42) eingreift, um die Plattform (4) bewegen zu können.

In vielen Fällen beschreiben die Treppen sehr enge Radien, insbesondere beim Übergang von einem zum anderen Stockwerk. Um auch hier den Einsatz eines Treppenlifts (1) für Körperbehinderte zu ermöglichen, ist die Verzahnung zwischen dem Antriebsrad (10, 30, 42) und der Zahnstange (6) praktisch richtungsunabhängig ausgelegt. Somit lassen sich nicht nur gerade Wege, sondern auch sehr enge Kurven mit dem Treppenlift (1) überwinden, wobei in jedem Fall die notwendige sichere Kraftübertragung zwischen dem Antriebsrad (10, 30, 42) und der Zahnstange (6) gewährleistet ist.

FIG. 1

Fördersystem für einen Treppenlift

Die Erfindung betrifft ein Fördersystem für einen Treppenlift mit einer zur Aufnahme der Last vorgesehenen Plattform, Sitz oder dergleichen, sowie mit einem zusammen mit der Last bewegten Antriebssystem mit mindestens einem Antriebsrad, das nach Art eines Zahnrades in eine längs des Förderweges angeordnete, an das Antriebsrad angepaßte Zahnstange eingreift.

Zum Transport bzw. zur Förderung von Lasten werden bekanntlich eine Vielzahl unterschiedlicher Fördersysteme benutzt. Von zunehmender Bedeutung sind dabei die sogenannten Treppenlifte, die es einem Körperbehinderten ermöglichen sollen, den durch eine Treppe überbrückten Höhenunterschied mit einer einem Lift ähnlichen Vorrichtung überwinden zu können. Der Behinderte kann dabei zusammen mit dem Rollstuhl befördert werden, oder er kann sich auf einen am Treppenlift vorgesehenen Sitz setzen.

Durch die DE-OS 26 32 684 ist bereits ein Fördersystem bekannt, das sich in der Praxis unter gewissen Umständen als recht zufriedenstellend für die Anwendung bei Treppenliften erwiesen hat. Mit dem bekannten Fördersystem lassen sich nämlich dreidimensionale Richtungsänderungen und sehr enge Kurven des Förderweges verwirklichen, was bei Treppenliften fast durchweg erwünscht ist. Ermöglicht werden solche Richtungsänderungen durch die Verwendung eines Rohres, in welchem ein durch ein Antriebsrad bewegtes Seil berührungsfrei geführt ist, und welches zugleich als Führungsrohr für den Treppenlift dienen und die Last tragen kann. Zur Übertragung der Seilbewegung auf die zu fördernde Last ist das Führungsrohr mit einem durchgehenden Längsschlitz versehen, durch den ein Verbindungsteil nach außen hervorragt, welches fest mit dem Teil verbunden ist und an

- 2 -

eine die Last tragende Platte angreifen kann. Zu erwähnen
ist noch, daß das Seil in Abständen mit kugelförmigen
Gleitkörpern versehen ist, um vor allem auch in den Kurven
eine berührungslose Führung des Seiles innerhalb des Führungsrohres sicherzustellen.

Neben dem schon genannten Vorteil, daß sich sehr
enge Kurven bewältigen lassen, was z.B. bei Wendeltreppen
oder bei über mehrere Stockwerke durchgehende Treppen gefordert wird, ist es auch günstig, daß der eigentliche Antrieb mit dem Antriebsrad ortsfest angeordnet ist und sich
nicht mit der Last mitbewegt. Dadurch läßt sich der Platzbedarf für den eigentlichen Treppenlift gering halten, auf
dem der Antrieb nicht untergebracht zu werden braucht. Somit erübrigt sich auch das Problem der Stromzuführung zu
dem "mitfahrenden Antrieb" auf dem Treppenlift.

In der Praxis stehen den Vorteilen des bekannten
Fördersystems aber einige Nachteile gegenüber. Insbesondere die Reibung der Gleitkörper an der Innenwand des Führungsrohres bereitet gewisse Schwierigkeiten. Da diese Reibung vor allem in den Kurven auftritt, wird sie mit zunehmender Anzahl der Kurven immer größer, so daß leistungsfähigere und damit auch teurere Antriebe erforderlich sind.
Außerdem erhöhen sich die Zugkräfte, so daß aus Sicherheitsgründen starke und teure Seile in dem Führungsrohr verwendet werden müssen.

Man hat daher auch schon Treppenlifte gebaut, bei
denen auf ein Seil zur Übertragung der Bewegung verzichtet
wird, und bei denen stattdessen der Antrieb zusammen mit
der Last "mitfährt". Bei einem bekannten Fördersystem für
einen solchen Treppenlift ist längs des Förderweges - also
längs der Treppe - eine Schiene mit einer Zahnstange verlegt, in die das als Zahnrad ausgebildete Antriebsrad eingreift. Es ist offensichtlich, daß bei dieser Lösung die Reibung im Antriebssystem vollkommen unabhängig von der Länge der Strecke und von der Anzahl der Kurven ist. Jedoch steht diesem Vorteil leider der gravierende Nachteil gegenüber, daß sich mit der Zahnstange keine engen Kurven bewältigen lassen. Wenn nämlich der Kurvenradius sehr gering ist, läßt sich an dieser Stelle keine Verzahnung mehr auf der Zahnstange vorsehen. Daher muß die Zahnstange stets an der Außenseite der Treppe - also an der dem Treppengeländer gegenüberliegenden Wandseite - verlegt werden, weil die an der Innenseite (Geländerseite) bei einer Treppe auftretenden Kurven sehr eng sind. Wenn sich nämlich an einem ersten Treppenteil nach Erreichen eines Stockwerkes der zweite Treppenteil anschließt, beschreibt das Treppengeländer in aller Regel eine sehr enge Kurve in einem Winkel von ca. 180°. Solchen engen Kurven vermag aber die Zahnstange nicht zu folgen.

Die daher zwingende Notwendigkeit, die an sich wegen der Reibung so günstige Zahnstange an der Außenseite der Treppe anordnen zu müssen, führt aber zu einem weiteren Nachteil. An der Außenseite befinden sich nämlich in den einzelnen Stockwerken oft die zu einem Zimmer führenden Türen. Es ist aber sowohl aus praktischen Gründen als auch vor allem wegen der bestehenden Unfallgefahr nicht zu verantworten, im Bereich der Türöffnung in Fußhöhe eine Zahnstange verlaufen zu lassen. Deshalb muß der Förderweg an diesen Stellen zwangsläufig unterbrochen werden. Daher läßt sich das bekannte Fördersystem mit Zahnrad und Zahnstange im Grunde genommen immer nur für die Überbrückung eines einzigen Stockwerkes verwenden, und auch dies mit der Einschränkung, daß die zugehörige Treppe nach Möglichkeit gerade verläuft und keine engen Kurven beschreibt. Für über mehrere Stockwerke durchgehende Treppen läßt sich das bekannte Fördersystem nicht einsetzen.

Zusammenfassend können die bisher üblichen Fördersysteme also in zwei unterschiedliche Arten aufgeteilt werden. Mit dem ersten Typ lassen sich infolge der Führungsrohre problemlos enge Kurven durchfahren, allerdings bereitet die Reibung erhebliche Schwierigkeiten. Diese lassen sich zwar bei dem zweiten Typ mit Zahnrad und Zahnstange eliminieren, allerdings zu Lasten der Tatsache, daß der Förderweg keine engen Kurven aufweisen darf. Es liegt also die bisher nicht gelöste Problematik vor, daß sich die Vorteile der beiden unterschiedlichen Fördersysteme gegenseitig ausschließen und bis heute nicht vereinigt werden konnten.

Der Erfindung liegt die Aufgabe zugrunde, hier Abhilfe zu schaffen und ein Fördersystem für Treppenlifte anzugeben, mit dem bei von der Länge des Weges unabhängiger Reibung auch enge Kurven gefahren werden können.

Ausgehend von dem im Oberbegriff des Anspruchs 1 vorausgesetzten Fördersystem erfolgt die Lösung der Aufgabe dadurch, daß die Verzahnung zwischen dem Antriebsrad und der Zahnstange weitgehend richtungsunabhängig ausgebildet ist.

Durch die Erfindung wird eine sichere formschlüssige Kraftübertragung ermöglicht, die praktisch völlig richtungsunabhängig ist, so daß auch sehr enge Kurven gefahren werden können. Es wird im Prinzip von dem Grundgedanken eines Fördersystems mit Zahnrad und Zahnstange ausgegangen, welches hinsichtlich der Reibung besonders günstig ist. Die Erfindung bringt nun den entscheidenden Vorteil, daß unter Zugrundelegung eines solchen Systems auch die in der Praxis geforderten engen Kurven verwirklicht werden können, was bei dem herkömmlichen Fördersystem mit Zahnrad und Zahnstange nicht möglich war. Wegen der weitgehend richtungsunabhängigen vorzugsweise sphärischen Verzahnung ist es erstmals möglich, die Zahnstange an der Innenseite einer Treppe zu verlegen und somit trotz der Verwendung einer Zahnstange mehrere Stockwerke durchgehend zu überwinden, und zwar unter Umgehung der oben beschriebenen Nachteile.

In zweckmäßiger Ausgestaltung der Erfindung ist die Zahnstange als eine Führungsstange im Sinne des weiter oben schon erwähnten Führungsrohres ausgebildet. Es lassen sich daher die Vorteile der beiden bekannten Fördersysteme miteinander kombinieren, wobei gleichzeitig deren Nachteile vermieden werden. Die erfindungsgemäße Verzahnung kann durch kugelförmige Zähne auf dem Antriebsrad und durch entsprechende kreisförmige Vertiefungen in der Führungsstange gebildet sein. Diese Vertiefungen sind in zweckmäßiger Weise in den Kurvenbereichen zu Langlöchern aufgeweitet. Eine andere Möglichkeit für die Verzahnung besteht darin, auf der Führungsstange kugelförmige Zähne anzuordnen und das Antriebsrad mit entsprechenden kreisförmigen Ausnehmungen zu versehen.

Besonders vorteilhaft ist die Verwendung einer weiteren Führung (die ebenfalls als Stange ausgebildet sein kann) zusätzlich zur Führungsstange in einer senkrechten Ebene und im parallelen Abstand zur Führungsstange. Auf diese Weise läßt sich eine vertikale Seitenwand vorsehen, die auf ihrer einen Seite die Plattform zur Aufnahme der Last und auf der anderen Seite das Antriebsrad trägt, und die durch die beiden Führungen sicher gehalten und längs des Förderweges geführt werden kann. In einer zweckmäßigen Ausgestaltung der Erfindung ist das Antriebsrad oberhalb der oberen Führungsstange angeordnet, die somit die Seitenwand und die Last trägt, während sich das untere Ende der Seitenwand an der unteren Führung abstützen kann.

Das Antriebsrad kann auch unterhalb der oberen Führungsstange angeordnet sein und von unten her mit der Führungsstange zur Kraftübertragung zusammenwirken. In diesem Fall wird die Seitenwand in zweckmäßiger Ausgestaltung durch mindestens eine Prismarolle getragen, die auf der oberen Seite der oberen Führungsstange abrollt. Auch am unteren Ende der Seitenwand ist in vorteilhafter Weise mindestens eine Prismarolle vorgesehen, über die sich die Seitenwand in horizontaler Richtung an der unteren Führung abstützt.

Je nach der Lage der Last - also je nach der Lage des Rollstuhls auf der Plattform der Seitenwand - wird sich auch der Schwerpunkt einstellen, der in den meisten Fällen aus der Mitte heraus verlagert ist. Dadurch treten Drehmomentenkräfte auf, die von den beiden parallelen Führungsstangen aufgenommen werden müssen. Auf den ansteigenden oder abfallenden Streckenabschnitten stellt dies kein Problem dar, allerdings können die Drehmomentenkräfte bei einer Horizontalfahrt nachteilig wirken, und es besteht die Gefahr, daß der untere nicht angetriebene Teil der Seitenplatte stehenbleibt und sich der Lift somit gefährlich neigen kann. Um hier Abhilfe zu schaffen, ist gemäß einer zweckmäßigen Ausgestaltung der Erfindung vorgesehen, daß auch die untere Führung zumindest in den horizontalen Streckenabschnitten in gleicher Weise wie die obere Führungsstange mit einem Hilfsantriebsrad in Eingriff steht, welches synchron mit dem oberen Antriebsrad gekuppelt ist und sich synchron mit ihm bewegt. Auf diese Weise wird auch in den horizontalen Streckenabschnitten ein sicherer Gleichlauf erreicht.

Weitere vorteilhafte Ausgestaltungen der Erfindung sind in den Unteransprüchen angegeben.

Nachfolgend wird die Erfindung anhand der in der Zeichnung dargestellten Ausführungsbeispiele näher erläutert. Es zeigen:

Fig. 1                    eine vereinfachte perspektivische  Ansicht eines
                          Treppenliftes,

Fig. 2 u. 3               jeweils eine Seitenansicht
                          einer ohne Plattform dargestellten Seitenwand eines
                          Treppenliftes mit einem
                          oberhalb der Führungsstange
                          angeordneten Antriebsrad,

Fig. 4 u. 5               jeweils eine Darstellung
                          gemäß den Fig. 2 und 3, jedoch mit einem unterhalb
                          der oberen Führungsstange
                          angeordneten Antriebsrad,

Fig. 6 u. 7               jeweils eine Darstellung
                          gemäß den Fig. 2 und 3,
                          jedoch mit einer mit kuge-
                          ligen Verdickungen ausge-
                          bildeten Führungsstange,

Fig. 8                    eine Draufsicht auf eine
                          im Bogen verlaufende Führungsstange gemäß Fig. 7,

Fig. 9                    eine Querschnittsansicht
                          eines Teils des Antriebsrades gemäß Fig. 7,

Fig. 10 u. 11             jeweils eine Darstellung gemäß den Fig. 2 und 3 mit einer als Rohr ausgebildeten
                          oberen Führungsstange und einem unterhalb der oberen
Führungsstange angeordneten Antriebsrad,

Fig. 12          eine Teilansicht der Führungsstange gemäß Fig. 11
                 und

Fig. 13          eine Draufsicht auf eine
                 kurvenförmig verlaufende
                 Führungsstange gemäß Fig.
                 12.

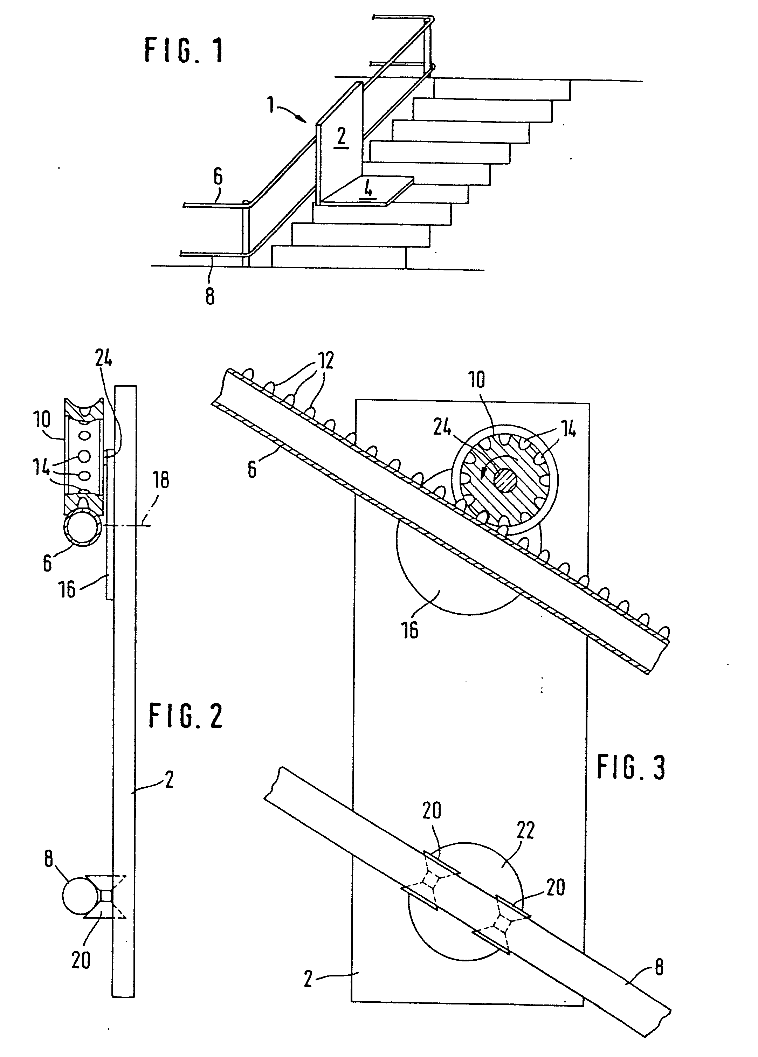

Der in Fig. 1 gezeigte Treppenlift 1 umfaßt eine
Seitenwand 2 sowie ein nicht dargestelltes Antriebssystem,
um die Seitenwand 2 längs der beiden Führungsstangen 6 und
8 zu bewegen, welche auf der Innenseite einer Treppe angeordnet sind. An ihrem unteren Ende ist die Seitenwand 2 mit
einer Plattform 4 versehen, auf der ein Rollstuhl (nicht
dargestellt) für einen Schwerbehinderten Platz findet. Damit der Treppenlift 1 im nicht benutzten Zustand möglichst
wenig Raum beansprucht, kann die Plattform 4 in eine parallele Lage zur Seitenwand 2 hochgeklappt werden. Im übrigen
können an der vorderen und hinteren Querseite der Plattform
4 nicht dargestellte Sicherungsplatten vorgesehen sein, die
sich schräg nach oben verstellen lassen, um so zu verhindern,
daß ein auf der Plattform 4 befindlicher Rollstuhl ungewollt von der Plattform 4 herunterrollt. Die erwähnten Sicherungsplatten lassen sich verstellen und in eine waagerechte Lage bringen, so daß bei Erreichen eines bestimmten
Stockwerkes der Rollstuhl von der Plattform 4 herunterfahren kann.

Der gezeigte Treppenlift ist mit einem sogenannten
"mitfahrenden Antrieb" versehen, d.h., das Antriebssystem
ist direkt auf dem Treppenlift 1 angeordnet. Für die Energiezufuhr zu dem Antriebssystem kann in an sich bekannter Weise eine Kabeltrommel vorgesehen werden, jedoch hat sich diese in der Praxis nicht als sehr günstig erwiesen. In zweckmäßiger Weise wird deshalb auf dem Treppenlift 1 eine Batterie (nicht dargestellt) vorgesehen, welche das Antriebssystem speisen kann. Schließlich ist noch zu erwähnen, daß die Betätigungsmittel - Aufwärts- oder Abwärtsfahrt, Halt - am oberen Ende und auf der der Plattform 4 zugewandten Seite der Seitenwand 2 angeordnet sind, wo sie für einen Schwerbehinderten, der sich mit seinem Rollstuhl auf der Plattform 4 befindet, gut zugänglich sind.

Nachfolgend werden nähere Einzelheiten des soweit beschriebenen Treppenliftes erläutert, wobei aus Gründen der Übersichtlichkeit die am unteren Ende der Seitenwand 2 befindliche Plattform 4 in den weiteren Figuren nicht mit dargestellt ist. In dem Ausführungsbeispiel gemäß den Fig. 2 und 3 wird die Seitenwand 2 durch die obere Führungsstange 6 und die untere Führungsstange 8 geführt, wobei die obere Führungsstange 6 über das Antriebsrad 10 die Vertikallast der Seitenwand 2 aufnimmt und diese somit trägt. Es ist ersichtlich, daß das angetriebene Antriebsrad 10 und die obere Führungsstange 6 nach Art eines Zahnrades und einer Führungsstange zusammenwirken. Abweichend von den bisher bekannten Anordnungen ist die Verzahnung jedoch weitgehend richtungsunabhängig, was in diesem Ausführungsbeispiel dadurch erreicht wird, daß die ebenso wie die untere Führungsstange 8 rund ausgebildete obere Führungsstange 6 auf ihrer oberen Seite mit kugelförmigen Zapfen 12 versehen ist, die in entsprechende angepaßte Ausnehmungen 14 des Antriebsrades 10 eingreifen und somit eine weitgehend richtungsunabhängige Kraftübertragung ermöglichen. Die beiden Führungsstangen 6 und 8, die - wie auch schon die Fig. 1 verdeutlicht - längs des gesamten Förderweges in einem parallelen Abstand zueinander verlaufen, können deshalb in vorteilhafter Weise auch sehr enge Kurven beschreiben, was mit den herkömmlichen Zahnstangen bisher nicht möglich war.

Das mit den kreisförmigen Ausnehmungen 14 versehene Antriebsrad 10 wird von einer oberen Fahrwerksplatte 16 getragen, welche um eine Achse 18 drehbar an der Seitenwand 2 befestigt ist. Um eine sichere Führung der Seitenwand 2 längs der beiden Führungsstangen 6 und 8 zu erreichen, sind an einer unteren, ebenfalls drehbar an der Seitenwand 2 gelagerten Fahrwerkplatte 22 zwei Prismarollen 20 angeordnet, über welche sich die Seitenwand 2 in horizontaler Richtung an der unteren Führungsstange 8 abstützt. Durch die drehbare Lagerung der gegenüber der oberen Fahrwerkplatte 16 in einer Ausnehmung der Seitenwand 2 versetzt angeordneten Fahrwerkplatte 22 wird erreicht, daß die beiden Prismarollen 20 jeder Richtungsänderung der durch die beiden Führungsstangen 6 und 8 bestimmten Förderstrecke folgen können. Dabei ist in jedem Fall für einen kurvengängigen und formschlüssigen Antrieb vermittels der dargestellten "Zapfen-Verzahnung" gewährleistet.

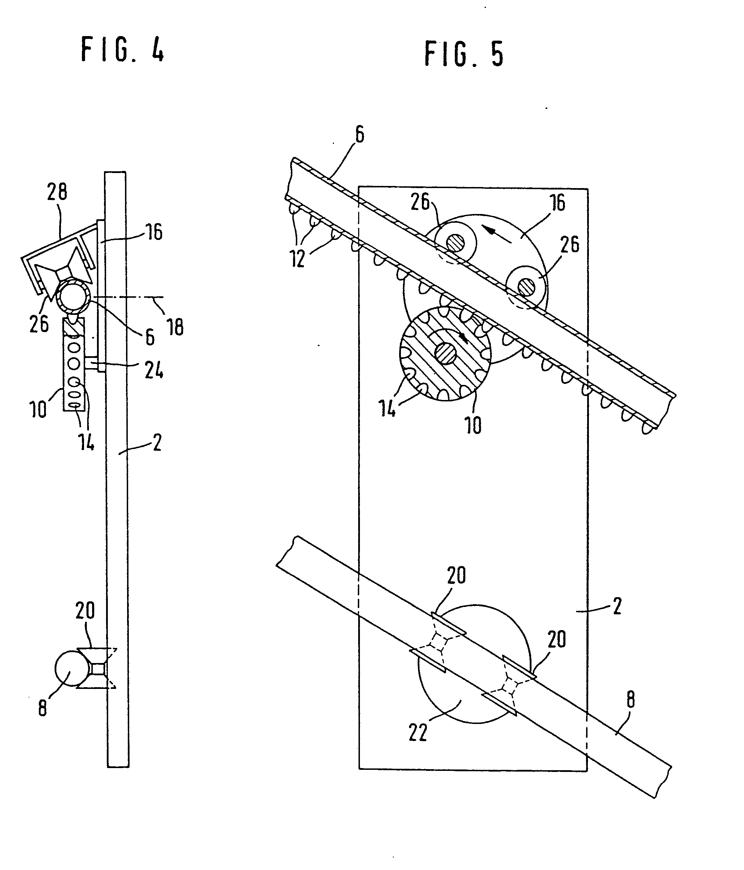

Anders als bei dem voranstehend beschriebenen Ausführungsbeispiel ist in den Figuren 4 und 5 das Antriebsrad 10 unterhalb der oberen Führungsstange 6 angeordnet, und entsprechend befinden sich auch die kugelförmigen Zapfen 12 auf der unteren Seite der Führungsstange 6. In diesem Falle kann das Antriebsrad 10 die Seitenwand 2 natürlich nicht tragen, und deshalb sind zwei obere Prismarollen 26 vorgesehen, die oben auf der Führungsstange 6 aufliegen und dort abrollen können. Um die Belastung durch die Seitenwand 2 sicher tragen zu können, sind die beiden Prismarollen 26 unter einem spitzen Winkel zur Längsachse der Seitenwand 2 angeordnet. Wie zu erkennnen ist, werden die beiden Prismarollen 26 durch ein Tragseil 28 gehalten, welches wiederum an der oberen, um die schon erwähnte Achse 18 drehbar an der Seitenwand 2 gelagerte Fahrwerkplatte 16 befestigt ist, so daß die beiden Prismarollen auch bei einer Änderung der Steigung der beiden Führungsstangen
sicher auf der oberen Führungsstange 6 abrollen können.
Das untere Ende der Seitenwand 2 stützt sich in der schon
beschriebenen Weise über die beiden Prismarollen 20 an der
unteren Führungsstange 8 ab.

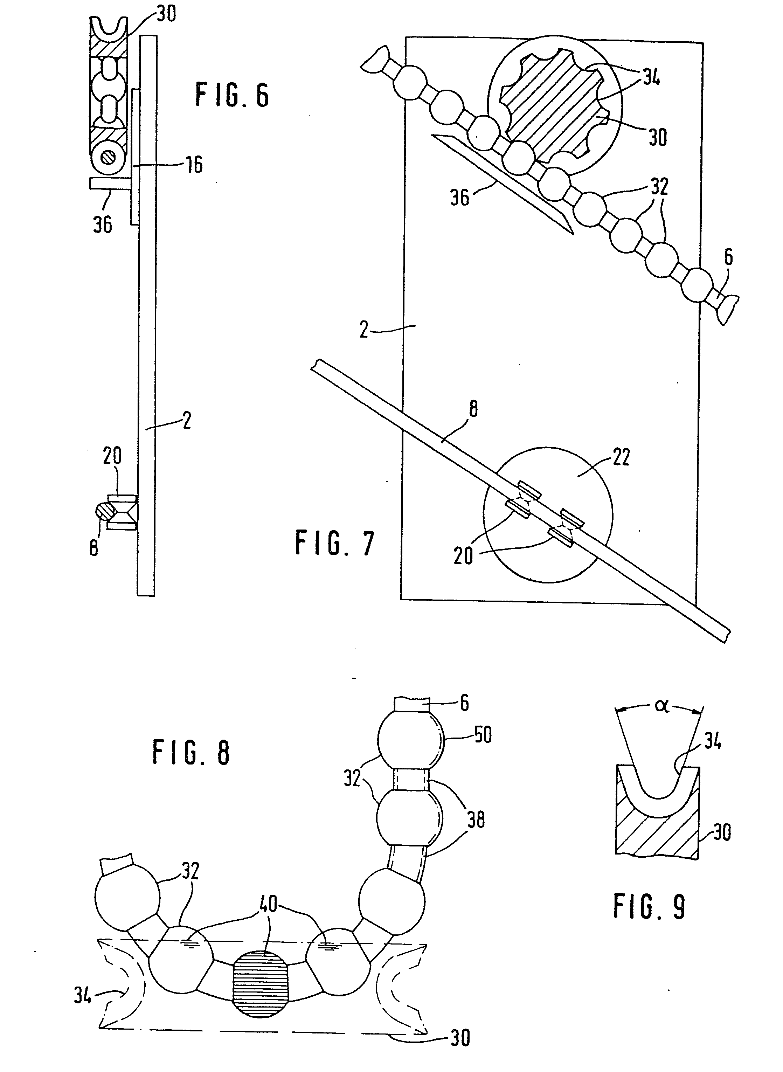

In einem weiteren Ausführungsbeispiel gemäß den
Figuren 6 und 7 wird die richtungsunabhängige Verzahnung
dadurch erreicht, daß die obere Führungsstange 6 mit kugeligen Verdickungen 32 versehen ist, welche sozusagen
die Zähne bilden und in entsprechend geformte Ausnehmungen
34 des Antriebsrades 30 eingreifen. In der Darstellung ist
das Antriebsrad 30 oberhalb der oberen Führungsstange 6
angeordnet, und in diesem Fall ist in zweckmäßiger Weise
als Gegenlager 36 eine Gleitführung vorgesehen. Die Abstützung des unteren Bereiches der Seitenwand 2 an der unteren Führungsstange 8 erfolgt in der schon beschriebenen
Weise über die beiden Prismarollen 20. Selbstverständlich
ist es auch bei diesem Ausführungsbeispiel möglich, das
Antriebsrad 30 unterhalb der oberen Führungsstange 6 anzuordnen, wenn dafür gesorgt wird, daß die Seitenwand 2
durch ein entsprechend ausgebildetes und oberhalb der Führungsstange 6 angeordnetes Gegenlager getragen werden kann.
Zu erwähnen ist noch, daß sich die kugeligen Verdickungen 32
durch Kugelkörper verwirklichen lassen, die auf der Führungsstange 6 fixiert werden.

In den Fig. 8 und 9 sind die bei einer Kurvenführung der Führungsstangen 6 und 8 auftretenden Verhältnisse verdeutlicht. Dabei sind die Berührungsstellen 40
zwischen den kugeligen Verdickungen 32 und dem Antriebsrad 30 schraffiert dargestellt. Die mittlere, vollständig
schraffierte Kugel überträgt das Drehmoment des Antriebsrades 30. Wenn bei Richtungsänderungen ein konstanter Kurvenradius verwendet und der Öffnungswinkel α entsprechend
gewählt wird, so entstehen an der der mittleren Kugel vorhergehenden und nachfolgenden Kugel die schraffierten Berührungsstellen, welche das Antriebsrad 30 mit den Ausnehmungen 34 seitlich stabil halten und eine gleichmäßige Richtungsänderung gewährleisten. Es ist zu erkennen, daß sich
mit dieser Anordnung relativ enge Kurven beschreiben lassen,
so daß die beiden Führungsstangen 6 und 8 ohne weiteres an
der Innenseite einer Treppe verlegt werden können, wo erfahrungsgemäß sehr enge Kurven gefordert werden. Je tiefer
in einer Kurve die der mittleren Kugel benachbarte Kugel
an der seitlichen Flanke entlang eingreift, um so mehr werden sie die gleiche Richtung annehmen. Umgekehrt gilt, daß,
je weiter sie die schrägen Flanken verlassen, die Richtung
um so abweichender werden kann. Auf jeden Fall ist es bei
der beschriebenen Verzahnung möglich, die Ausnehmungen 34
des Antriebsrades 30 und die kugeligen Verdickungen 32 in
der Weise zu wählen, daß einerseits die Drehmomentenübertragung gewährleistet ist und andererseits eine ausreichende seitliche Stabilisierung des Antriebsrades 30 in den
Kurven erreicht wird. Es ist noch darauf hinzuweisen, daß
in Fig. 8 mit 50 der Bereich mit Gleitreibung und mit 38
die Bereiche mit Rollreibung versehen sind.

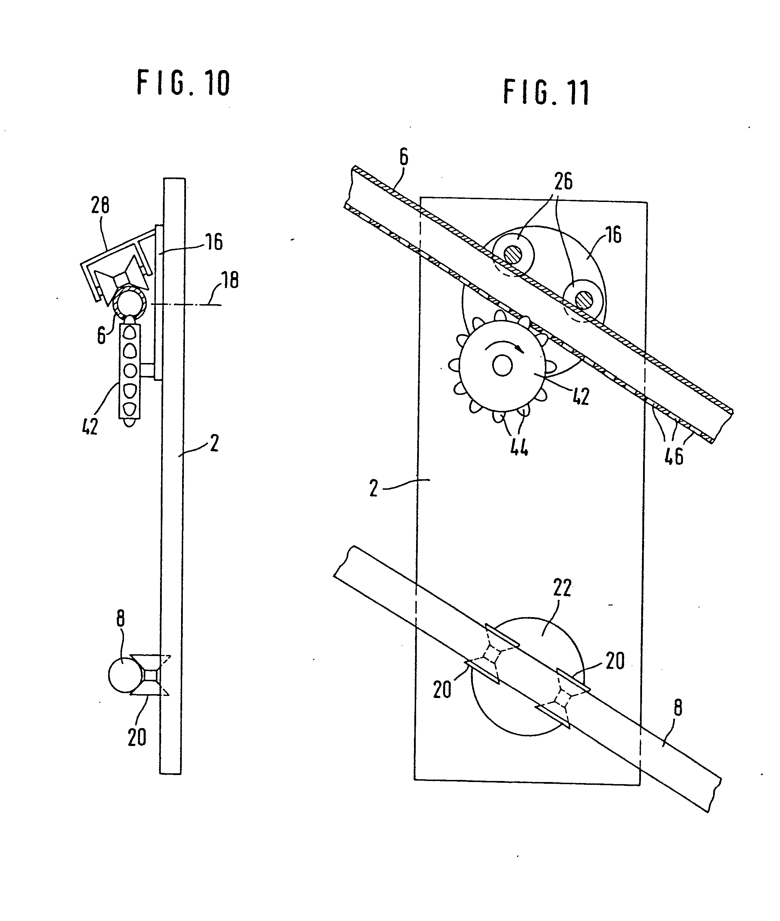

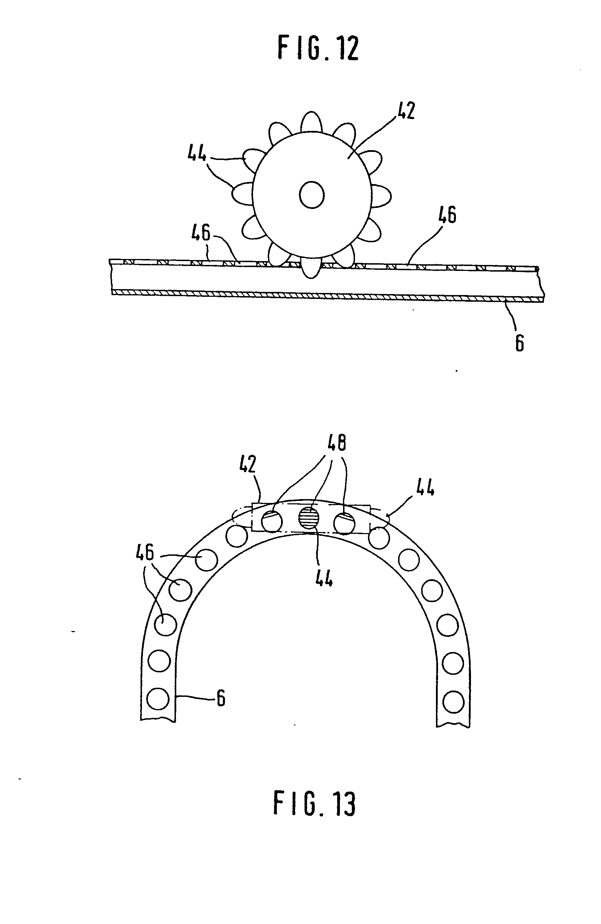

Bei dem in Figuren 10 und 11 gezeigten Ausführungsbeispiel ist das Antriebsrad 42 mit kugelförmigen Zähnen 44
versehen, welche in Vertiefungen 46 der Führungsstange 6
eingreifen. Letztere ist hier als ein Hohlrohr ausgebildet,
so daß die erwähnten Vertiefungen 46 durch Bohrungen in
der Rohrwandung gebildet sind. Da sich das Antriebsrad 42
auf der unteren Seite der Führungsstange 6 befindet, sind
auch hier wieder die beiden Prismarollen 26 vorgesehen,
welche die Seitenwand 2 tragen. Natürlich ist es auch hier
möglich, das Antriebsrad 42 oberhalb der oberen Führungsstange 6 anzuordnen, wie dies in der Fig. 12 dargestellt ist.

In Fig. 13 sind die Verhältnisse in den Kurven bei
dem Ausführungsbeispiel gemäß Fig, 12 verdeutlicht. Wie schon zuvor in der Fig. 8 sind auch hier die Berührungsstellen 48 zwischen dem Antriebsrad 42 und der Führungsstange 6 schraffiert dargestellt. Durch den mittleren, vollständig schraffierten kugelförmigen Zahn 44 wird das Drehmoment des Antriebsrades 42 übertragen, während durch die Berührungsstellen des unmittelbar vorhergehenden und nachfolgenden Zahnes 44 die seitliche Stabilisierung des Antriebsrades 42 erfolgt.

Allen beschriebenen Ausführungsbeispielen liegt das Grundprinzip einer sphärischen und weitgehend richtungsunabhängigen Verzahnung zugrunde, die durch runde bzw. kugelförmige Zähne verwirklicht wird, welche in entsprechende Ausnehmungen passen. Trotz der damit geschaffenen Möglichkeit, auch enge Kurven der Förderstrecke zu ermöglichen, ist der wichtige Vorteil gegeben, daß die auftretende Reibung völlig unabhängig von der Länge der Förderstrecke und von der Anzahl der Kurven ist. Somit können also bei formschlüssiger Kraftübertragung auch mehrere Stockwerke mit dem Treppenlift überwunden werden, der sich außerdem durch eine gute Laufruhe auszeichnet.

Die beiden parallelen Führungsstangen 6 und 8 verlaufen natürlich nicht immer schräge, vielmehr sind auch Bereiche mit horizontaler Streckenführung vorhanden. Es hat sich nun gezeigt, daß die sichere Führung des Treppenlifts in den horizontalen Streckenabschnitten oftmals Schwierigkeiten bereitet, da der Schwerpunkt der Anordnung meistens aus der Mitte heraus verlagert ist, je nach dem in welcher Lage sich ein Rollstuhl auf der Plattform 4 befindet. Dies spielt bei Steigungen der beiden Führungsstangen zwar keine Rolle, vielmehr läßt sich dort eine sehr gute Stabilität des Treppenlifts 1 erreichen. Bei einer horizontalen Streckenführung kann allerdings die Gefahr bestehen, daß der untere, nicht angetriebene Teil der Seitenplatte 2 dazu neigt, stehenzubleiben, was sich natürlich nachteilig auswirkt. Zur Besei-

tigung dieser Schwierigkeiten ist deshalb gemäß einer vorteilhaften Weiterbildung der Erfindung vorgesehen, daß die
untere Führungsstange 8 zumindest in den Bereichen mit horizontaler Streckenführung in gleicher Weise wie die obere
Führungsstange mit kugelförmigen Zähnen bzw. mit Ausnehmungen versehen, und daß ein Hilfsantriebsrad vorgesehen ist,
so daß auch über die unter Führungsstange 8 ein Antrieb
erfolgt. Um den hierbei erforderlichen synchronen Gleichlauf zwischen dem oberen und dem unteren Antriebsrad zu
erreichen, sind beide miteinander in einem Verhältnis
von 1:1 gekuppelt (nicht dargestellt). Auf diese Weise
kann der Treppenlift 1 auch in der horizontalen Strecke
stabil gehalten werden.

Die in den Zeichnungen dargestellten Ausführungsbeispiele setzen jeweils nur ein einziges Antriebsrad 10,
30 bzw. 42 voraus. Selbstverständlich ist es auch möglich,
mehrere Antriebsräder zu verwenden. Im übrigen soll noch
darauf hingewiesen werden, daß das neuartige Fördersystem
zwar vorteilhaft bei einem Treppenlift angewendet werden
kann, jedoch nicht darauf beschränkt ist. So ist es beispielsweise möglich, das Fördersystem auch bei einer Einschienen-Hängebahn oder bei einer Zahnradbahn anzuwenden.

Abschließend sei noch darauf hingewiesen, daß aus
Gründen der Übersichtlichkeit in den Zeichnungen jeweils
nur das Antriebsrad und nicht das komplette Antriebssystem
dargestellt ist.

Patentansprüche

1. Fördersystem für einen Treppenlift, mit einer zur Aufnahme der Last vorgesehenen Plattform, Sitz oder dergleichen, sowie mit einem zusammen mit der Last bewegten Antriebssystem mit mindestens einem Antriebsrad, das nach Art eines Zahnrades in eine längs des Förderweges angeordnete, an das Antriebsrad angepaßte Zahnstange eingreift, dadurch gekennzeichnet, daß die Verzahnung zwischen dem Antriebsrad (10, 30, 42) und der Zahnstange (6) weitgehend richtungsunabhängig ausgebildet ist.

2. Fördersystem nach Anspruch 1, dadurch gekennzeichnet, daß es mit einer sphärischen Verzahnung versehen ist.

3. Fördersystem nach Anspruch 1 oder 2, dadurch gekennzeichnet, daß die Zahnstange durch eine Führungsstange (6) gebildet ist, die in ihrer Längsrichtung im Abstand voneinander angeordnete kreisförmige Vertiefungen (46) aufweist, und daß das Antriebsrad (42) auf seinem Umfang mit kugelförmigen Zähnen (44) versehen ist, die in die Vertiefungen (46) eingreifen.

4. Fördersystem nach Anspruch 1 oder 2, dadurch gekennzeichnet, daß die Zahnstange durch eine Führungsstange (6) gebildet ist, die in ihrer Längsrichtung mit im Abstand voneinander angeordneten etwa kugelförmigen Zapfen (12) versehen ist, und daß das Antriebsrad (10) auf seinem Umfang kreisförmige Ausnehmungen (14) aufweist, in welche die kugelförmigen Zapfen eingreifen.

5. Fördersystem nach Anspruch 1 oder 2, dadurch gekennzeichnet, daß die Führungsstange (6) mit Zähnen in Form von kugeligen Verdickungen (32) versehen ist, und daß das Antriebsrad (30) auf seinem Umfang entsprechende Ausnehmungen (34) aufweist, in welche die Verdickungen (32) eingreifen.

6. Fördersystem nach Anspruch 3, dadurch gekennzeichnet, daß die Vertiefungen (46) in den Bereichen, in denen die Führungsstange (6) eine Kurve beschreibt, in radialer Richtung zur Kurve aufgeweitete Langlöcher sind.

7. Fördersystem nach einem der vorhergehenden Ansprüche, dadurch gekennzeichnet, daß unterhalb der Zahn- bzw. Führungsstange (6) eine untere Führung (8) in parallelem Abstand zur Führungsstange in einer senkrechten Ebene angeordnet ist.

8. Fördersystem nach Anspruch 7, dadurch gekennzeichnet, daß eine vertikale Seitenwand (2) vorgesehen ist, welche auf ihrer einen Seite die Plattform (4) zur Aufnahme der Last und auf der anderen Seite das mindestens eine Antriebsrad (10, 30, 42) trägt, und welche durch die obere Führungsstange (6) und die untere Führung (8) gehalten und geführt ist.

9. Fördersystem nach Anspruch 8, dadurch gekennzeichnet, daß die Vertiefungen (46) bzw. die Zapfen (12) der Führungsstange (6) an deren Unterseite angeordnet sind.

10. Fördersystem nach Anspruch 8, dadurch gekennzeichnet, daß das mindestens eine Antriebsrad (10, 30, 42) unterhalb der oberen Führungsstange (6) angeordnet ist.

11. Fördersystem nach Anspruch 10, dadurch gekennzeichnet, daß die Seitenwand (2) mit mindestens einer Prismarolle (26) versehen ist, die auf der oberen Seite der oberen Führungsstange (6) aufliegt, wodurch die Seitenwand (2) getragen wird.

12. Fördersystem nach Anspruch 11, dadurch gekennzeichnet, daß die Achse der Prismarolle (26) unter einem spitzen Winkel zur vertikalen Längsachse der Seitenwand (2) geneigt ist.

13.    Fördersystem nach Anspruch 11, dadurch gekennzeichnet, daß die Prismarolle (26) an einer Fahrwerkplatte (16) befestigt ist, welche um eine senkrecht zur vertikalen Längsachse der Seitenwand (2) angenommene Achse (18) drehbar an der Seitenwand (2) gelagert ist.

14.    Fördersystem nach Anspruch 8, dadurch gekennzeichnet, daß das mindestens eine Antriebsrad (30) mit den kugelförmigen Ausnehmungen (34, 14) oberhalb der oberen Führungsstange (6) angeordnet ist, und die Seitenwand (2) trägt.

15.    Fördersystem nach Anspruch 14, dadurch gekennzeichnet, daß auf der dem Antriebsrad (30) gegenüberliegenden unteren Seite der Führungsstange (16) eine Gleitführung als Gegenlager (36) angebracht ist.

16.    Fördersystem nach einem der Ansprüche 8 - 15, dadurch gekennzeichnet, daß sich das untere Ende der Seitenwand (2) in horizontaler Richtung über mindestens eine untere Prismarolle (20) an der unteren Führung (8) abstützt.

17.    Fördersystem nach Anspruch 16, dadurch gekennzeichnet, daß die untere Prismarolle (20) an einer unteren Fahrwerkplatte (22) befestigt ist, welche um eine senkrecht zur vertikalen Längsachse der Seitenwand angenommene Achse drehbar an der Seitenwand (2) gelagert ist.

18.    Fördersystem nach einem der Ansprüche 7 - 17, dadurch gekennzeichnet, daß die untere Führung (8) zumindest in den horizontalen Streckenabschnitten in gleicher Weise wie die obere Führungsstange (6) mit kugelförmigen Zähnen oder kugeligen Verdickungen bzw. mit Vertiefungen versehen ist und mit einem entsprechend ausgebildeten Hilfsantriebsrad in Eingriff steht, welches mit dem oberen Antriebsrad gekuppelt ist und sich synchron mit ihm bewegt.

19.    Fördersystem nach einem der Ansprüche 6 - 18, da-

0033294

<u>durch gekennzeichnet</u>, daß die Führungsstange (6) mit den Vertiefungen (46) als Hohlrohr ausgebildet ist und die Vertiefungen (46) durch Löcher in der Rohrwandung gebildet sind.

FIG. 1

FIG. 2

FIG. 3

FIG. 4

FIG. 5

FIG. 6

FIG. 7

FIG. 8

FIG. 9

FIG. 10

FIG. 11

0033294

# F I G. 12

# F I G. 13